# EUROPÄISCHE PATENTANMELDUNG

(11) **EP 2 202 055 A2**
(43) Veröffentlichungstag der Anmeldung: **30.06.2010**
(21) Anmeldenummer: 09015995.5
(22) Anmeldetag: 23.12.2009
(51) Int. Cl.: B31F 1/28, B31B 1/25, B31B 3/00, B31B 1/02

(54) **Verfahren zur Herstellung von kaschierten Nutzen aus ein- oder mehrlagiger Wellpappe und Vorrichtung zur Durchführung des Verfahrens**

(30) Priorität: 23.12.2008 DE 102008062964
(71) Anmelder: HANS KOLB Wellpappe GmbH & Co. KG, 87700 Memmingen (DE); Stock Maschinenbau GmbH, 36323 Grebenau-Eulersdorf (DE)
(72) Erfinder: Ruffing, Bernhard Dr. Ing., 86899 Landsberg am Lech (DE); von Liel, Andreas Dipl. -Ing., 87700 Memmingen (DE); Stock, Lothar Dipl. Ing., 36304 Alsfeld (DE)
(74) Vertreter: Fiener, Josef

(57) **Zusammenfassung**

Die Erfindung betrifft ein Verfahren zur Herstellung von kaschierten Nutzen (206a,b) aus ein- oder mehrlagiger Wellpappe, insbesondere zur Bildung von Faltkisten und umfasst die Schritte: (a) Aufeinanderkaschieren von bogenförmigen Materialien zur Bildung von Materialbögen (200), (b) Übergabe der Materialbögen (200) an eine Rill- und Besäumeinheit (13) zur Bildung von Nutzen (206a,b) und (c) Übergabe der Nutzen (206a,b) an eine Weiterbearbeitungsstation, wobei die Materialbögen (200) mit in Vorschubrichtung (A) bündiger Vorderkante (202) aufeinanderkaschiert werden und in der Rill- und Besäumeinheit (13) eine parallel zur Vorschubrichtung (A) der Materialbögen (200) ausgerichtete Rillung und Besäumung der in Vorschubrichtung seitlichen Kanten (205) der Nutzen (206a,b) erfolgt. Zudem wird eine zugehörige Vorrichtung zum Ausführen dieses Verfahrens beschrieben.

## Beschreibung

Die Erfindung betrifft ein Verfahren zur Herstellung von Nutzen aus ein- oder mehrlagiger Wellpappe mit den oberbegrifflichen Merkmalen des Anspruchs 1 sowie eine Vorrichtung zur Durchführung des Verfahrens mit den oberbegrifflichen Merkmalen des Anspruchs 5.

Für die Herstellung von als Nutzen bezeichneten Zuschnitten aus Wellpappe, die beispielsweise zur Bildung von Faltkisten verwendet werden, wird herkömmlicherweise zunächst eine bedruckte oder unbedruckte Decklage auf eine gewellte Trägerlage aufkaschiert. Hierzu wird die Trägerlage mit einem Klebstoff oder Leim benetzt und anschließend mit der Decklage zusammengeführt. Unter Wärme- und Druckbeaufschlagung härtet der Kleber aus, wodurch die Lagen dauerhaft zu einem Wellpappebogen verbunden werden. Beim Kaschieren wird gewöhnlich die Decklage so dimensioniert, dass diese die Trägerlage allseitig um einige Millimeter bis wenige Zentimeter überragt.

Die kaschierten Wellpappebögen werden gestapelt und für die Weitergabe an eine in der Produktionslinie nachgeordnete Zuschnitt/Stanzmaschine bereitgestellt. In der Zuschnitt/Stanzmaschine werden die Wellpappebögen allseitig beschnitten bzw. die letztendliche Nutzenform aus den Wellpappebögen ausgestanzt. Um aus den Nutzen Faltkisten bilden zu können, werden diese nachfolgend an eine Faltklebemaschine weitergegeben. Dort werden die Nutzen gefalzt und über seitliche Laschen verklebt oder geheftet. Eine Faltkiste kann dann durch Aufstellen des geklebten bzw. gehefteten Nutzens gebildet werden.

Nachteilig an den herkömmlichen Verfahren ist, dass drei oder mehr Arbeitsschritte in separaten Vorrichtungen durchlaufen werden müssen, um eine fertigen Faltkiste zu bilden. Als besonders nachteilig erweist sich hierbei das Ausstanzen der Nutzen aus den Bögen, um die überstehenden Randabschnitte zu entfernen. Dieser Arbeitsgang ist nicht nur energieaufwändig, sondern bringt auch einen Anfall an Überschussmaterial mit sich. Dieses muss entweder entsorgt oder der Wiederverwertung zugeführt werden. Durch die zusätzlichen Arbeitsgänge werden die Taktzeiten bei der Herstellung und damit die Stückkosten erhöht.

Aufgabe der vorliegenden Erfindung ist es daher, ein Verfahren und eine Vorrichtung zur Verfügung zu stellen, durch die die oben genannten Nachteile überwunden werden. Dabei sollen herkömmliche Anlagen so weitergebildet werden, dass das Kaschieren der Bögen, sowie das Besäumen und Rillen der Nutzen in einem Arbeitsgang bzw. in einer Vorrichtung erfolgt, und somit gebrauchsfertige Nutzen für die Inline-Verarbeitung zur Verfügung gestellt werden können.

Diese Aufgabe wird gelöst durch ein Verfahren mit den Merkmalen des Anspruchs 1 sowie eine Vorrichtung mit den Merkmalen des Anspruchs 5. Vorteilhafte Weiterbildungen der Erfindung sind Gegenstand der abhängigen Ansprüche.

Das erfindungsgemäße Verfahren zur Herstellung von Nutzen aus Wellpappebögen eignet sich vor allem zur Verwendung mit ein- oder mehrlagiger Wellpappe. Aus den mit dem Verfahren hergestellten Nutzen können im Anschluss insbesondere Faltkisten gebildet werden, wobei die Nutzen auch für andere Zwecke verwendet werden können und das Verfahren somit nicht auf die Herstellung von Nutzen für Faltkisten beschränkt bleibt. Das erfindungsgemäße Verfahren umfasst die folgenden Schritte:
Zunächst werden bogenförmige Materialien in einer Kaschiereinheit aufeinanderkaschiert und so Wellpappebogen für die spätere Bildung von Nutzen in einer Rill- und Besäumeinheit gebildet. Bei den bogenförmigen Materialien handelt es sich zum einen um einen Deckbogen und zum anderen um einen Wellpappenbogen. Der glatte Deckbogen kann dabei beispielsweise aus Karton oder Pappe mit unterschiedlichen Papierqualitäten und Flächengewichten bestehen. Bei der gewählten Trägerlage besteht ebenfalls eine Wahlmöglichkeit bezüglich der verwendeten Materialqualität, wobei die Auswahl durch die letztendliche Verwendung des fertigen Produktes bestimmt wird. Bezüglich der Decklage besteht die Möglichkeit zur Verwendung von Bögen, die in einem Offset-Verfahren vor dem Kaschieren bedruckt wurden. Die Deckbögen werden in der Kaschiermaschine mit den Trägerbögen verleimt und damit Wellpappebögen für die Bildung von Nutzen zur Verfügung gestellt. Nach dem Kaschieren liegt ein einseitig offener oder ein beidseitig gedeckter Wellpappebogen vor.

Die Bögen werden nachfolgend von der Kaschiereinheit beispielsweise über eine Fördervorrichtung an eine Rill- und Besäumeinheit weitergegeben und dort weiterbearbeitet.
Das erfindungsgemäße Verfahren ist dabei **dadurch gekennzeichnet, dass** die bogenförmigen Materialien, d.h. der Trägerbogen sowie der Deckbogen in der Kaschiereinheit mit in Vorschubrichtung bündiger Vorderkante aufeinanderkaschiert werden und in der Rill- und Besäumeinheit eine parallel zur Vorschubrichtung der gebildeten Nutzen ausgerichtete Längs-Rillung und Besäumung erfolgt. Beim Rillen bewirkt wenigstens ein auf einer Welle in der Rill- und Besäumeinheit angeordnetes Rillmesser durch Druck auf die Nutzen eine Materialverdichtung. Dem Rillmesser gegenüber kann zusätzlich eine weitere Welle oder ein Zylinder angeordnet sein, der einen Rillkanal aufweist. Durch diesen erfolgt eine weitere Verdrängung des Materials und es werden so Rililinien gebildet, die eine exakte Definition der Faltkanten der späteren Faltkiste vorgeben. Zusammen mit der Rillung sieht das erfindungsgemäße Verfahren auch vor, dass in der Rill- und Besäumeinheit das Besäumen der seitlichen, zur Vorschubrichtung parallelen Kanten der Nutzen auf das zur Bildung der Faltschachtel vorgesehene Format erfolgt. Zu diesem Zweck weist die Rill- und Besäumeinheit neben den für die Rillung notwendigen Werkzeugen auf einer zusätzlichen oder der gleichen Welle drehfest angeordnete, umlaufende Besäumwerkzeuge, beispielsweise Messer auf.

Im erfindungsgemäßen Verfahren werden die Wellpappebögen aus der Kaschlereinhelt an die Rill- und Besäumeinheit weitergegeben. Da diese Wellpappebögen Lagen mit in Vorschubrichtung bündiger Vorderkante aufweisen, können sie direkt ohne weitere Stanzung an eine Rill- und Besäumeinheit weitergegeben werden. In der Rill- und Besäumeinheit erfolgt aufgrund der bereits fertigen Vorderkante lediglich das Formatieren der Seitenkanten sowie das Rillen der Nutzen. Das erfindungsgemäße Verfahren verkürzt somit die Herstellungszeiten für die Nutzen erheblich, da Kaschieren, Besäumen und Rillen innerhalb eines Arbeitsganges bzw. kurz nacheinander durchgeführt werden und somit das Zwischenhandling der Nutzen entfällt. Die Nutzen können so unmittelbar nach dem Durchlaufen der Rill- und Besäumeinheit der Inline-Verarbeitung zugeführt werden. Um eine passgenaue Säumung und Rillung der zu bildenden Nutzen parallel zur Vorschubrichtung zu gewährleisten, wird vor der Übergabe an die Rill- und Besäumeinheit eine exakte Ausrichtung der Wellpappebögen durchgeführt. Diese Ausrichtung erfolgt vorzugsweise auf einer der Rill- und Besäumeinheit unmittelbar vorgelagerten Richtstrecke, bei der beispielsweise seitliche Anschläge oder Richtkanten die Ausrichtung jedes Bogens vornehmen. In der Rill- und Besäumeinheit erfolgt gleichzeitig mit dem Besäumen eine oder mehrere Längs-Rillung(-en) der gebildeten Nutzen parallel zur Vorschubrichtung.

Wie angeführt werden in der Kaschiermaschine die Deck- und Trägerbögen der Wellpappe passgenau verklebt bzw. verleimt. Von besonderer Bedeutung ist hierbei, dass die Deck- und Trägerbögen mit in Vorschubrichtung bündiger Vorderkante verklebt werden, sodass die fertigen Wellpappebögen ohne weitere Bearbeitung an die Rill- und Besäumeinheit weitergegeben werden können. Als günstig wird angesehen, wenn die Wellenlage des Trägerbogens quer zur Vorschubrichtung ausgerichtet ist. Die Ausrichtung der Welle quer zur Vorschubrichtung, also als liegende Welle, empfiehlt sich, da die bündige Ausrichtung der in Vorschubrichtung vorderen Kante in der Kaschiereinheit hierbei besonders einfach und genau durchgeführt werden kann und somit eine reibungslose Weitergabe der Wellpappebögen an die Rill- und Besäumeinheit gewährleistet ist.

Um die gesamte Breite der zugeführten Materialbahn durch die Belegung mit zwei und mehr Nutzen verwenden zu können, wird es als empfehlenswert angesehen, wenn die Nutzen in der Rill- und Besäumeinheit parallel zur Vorschubrichtung getrennt werden können, um so Nutzen gleicher Breite zu erhalten, wobei auch unterschiedliche Breiten möglich sind. Mit dem Trennen der Nutzen erfolgt gleichzeitig ein Besäumen der innen liegenden Seitenkanten der Nutzen. Hierdurch kann bei besserer Ausnutzung der Bogenfläche die Produktivität der Anlage weiter erhöht und gleichzeitig die Taktzeit signifikant verringert werden. Das erfindungsgemäße Verfahren ermöglicht es, in einem Arbeitsgang die als Rohmaterial für die Herstellung von Nutzen dienenden Wellpappebögen in einer Kaschiermaschine zu bilden und diese nach dem Kaschiervorgang direkt an eine Rill- und Besäumeinheit weiterzugeben. Dort erfolgt das Formatieren der Nutzen. Es ergeben sich somit Effizienzvorteile bei der Herstellung von Nutzen aus ein- oder mehrlagigen Wellpappebögen, beispielsweise für die Herstellung von kleinformatigen Faltkisten.

Ein weiterer Vorteil des erfindungsgemäßen Verfahrens ist darin zu sehen, dass keine zusätzliche Besäumung der in Vorschubrichtung vorderen Kanten des Wellpappebogens bzw. des daraus gebildeten Nutzens erfolgen muss, da eine passgenaue Verklebung der Lagen der Wellpappe bereits in der dafür ausgelegten Kaschiereinheit sichergestellt wird. Ein entsprechender Überstand des Deckbogens, bzw. der Deckbögen bei beidseitig gedeckter Wellpappe, über den Trägerbogen, der in herkömmlichen Verfahren einen zusätzlichen Stanzschritt notwendig macht, ist somit nicht gegeben, Im erfindungsgemäßen Verfahren ist zudem vorgesehen, dass das Längs-Rillen und Besäumen der Nutzen während des Vorschubes der Nutzen in einer einzigen Vorrichtung bzw. Anlage erfolgt. Herkömmliche Anlagen arbeiten beispielsweise mit separat aufgestellten Stanzen, die die Arbeitsabläufe jedoch erheblich verlängern und daneben einen wesentlich höheren Platz- und Energiebedarf aufweisen.

Die Erfindung stellt weiterhin eine Vorrichtung zur Verfügung, in der kaschierte Nutzen aus Wellpappebögen unter Anwendung des oben beschriebenen Verfahrens hergestellt werden können. Die Vorrichtung umfasst u.a. eine Kaschiereinheit zur Bildung von Wellpappebögen, eine Fördereinrichtung für diese Bögen und eine Rill- und Besäumeinheit. Die Vorrichtung weist hierzu wenigstens eine Welle mit daran drehfest angeordneten, umlaufenden Rill- und Besäumwerkzeugen auf. In der Kaschiermaschine erfolgt eine Kaschierung von Deck- und Trägerbögen mit in Vorschubrichtung bündiger Vorderkante. Ein separates Besäumen dieser Vorderkante, beispielsweise in einer Stanze, wird daher überflüssig. Zur passgenauen Besäumung und Rillung in der Rill- und Besäumeinheit weist die Vorrichtung zudem Mittel zur Ausrichtung der Wellpappebögen aufweist. Diese Mittel, beispielsweise Greifer, nehmen die Vorderkante der Wellpappebögen auf und richten diesen derart aus, dass die Werkzeuge der Rill- und Besäumeinheit an vorher definierten Positionen des Bogens angreifen können. Durch eine solche der Rill- und Besäumeinheit vorgelagerte Ausrichtstrecke wird sichergestellt, dass die Bögen passgenau an die Rill- und Besäumeinheit übergeben werden, sodass gewährleistet ist, dass in der Rill- und Besäumeinheit die dort durchgeführte Rillung und das Besäumen der Nutzen an exakt definierten Positionen erfolgt. Die oben vorgestellte Vorrichtung erlaubt die Bildung von Nutzen, beispielsweise für die Herstellung von Faltkisten, in einem Arbeitsgang. Eine der Kaschiereinheit nachgeordnete Stanzvorrichtung zur Bearbeitung der Ränder der kaschierten Wellpappebögen ist daher nicht notwendig.

Da in der erfindungsgemäßen Vorrichtung Materialbögen mit Breiten von beispielsweise bis zu 1650 mm verwendet werden können, soll eine möglichst vollständige Ausnutzung der Bogenbreite erreicht werden. Hierzu können mehrere Nutzen nebeneinander in der Bogenbreite angeordnet werden. Um im gleichen Arbeitsgang zwei und mehr Nutzen in der Rill- und Besäumeinheit erstellen und bearbeiten zu können, ist wenigstens ein parallel zur Vorschubrichtung der Nutzen ausgerichtetes Trennwerkzeug vorgesehen. Bei diesem Trennwerkzeug handelt es sich insbesondere um ein rotierendes Trennmesser.

In der erfindungsgemäßen Vorrichtung werden somit die Arbeitsschritte Kaschieren, Rillen und Besäumen zusammengefasst, sodass die gebildeten Nutzen direkt aus der Rill- und Besäumeinheit an die Inliner-Verarbeitung weitergegeben werden können. Die für das Kaschieren der Bögen verwendeten Leime weisen unter Umständen unterschiedliche Eigenschaften bezüglich des Aushärtens auf. Um eine sichere Verbindung der einzelnen Lagen der Wellpappe zu erreichen, sieht eine bevorzugte Ausführungsform der erfindungsgemäßen Vorrichtung vor, dass zwischen der Rill- und Besäumeinheit und der Kaschiereinheit eine Press- oder Heizstrecke vorgesehen ist. Diese stellt sicher, dass die Wellpappebögen eine ausreichende Stabilität für die Bearbeitung in der Rill- und Besäumeinheit aufweisen.

Weitere Vorteile, Merkmale und Besonderheiten der Erfindung ergeben sich aus der nachfolgenden Beschreibung einer bevorzugten, jedoch nicht beschränkenden Ausführungsform der Erfindung anhand der schematischen Zeichnung. Es zeigt:
Fig. 1 eine Ausführung der erfindungsgemäßen Vorrichtung in Seitenansicht,
Fig. 2 ein Ablaufschema des erfindungsgemäßen Verfahrens, und
Fig, 3 eine schematische Draufsicht auf eine Rill- und Besäumeinheit.

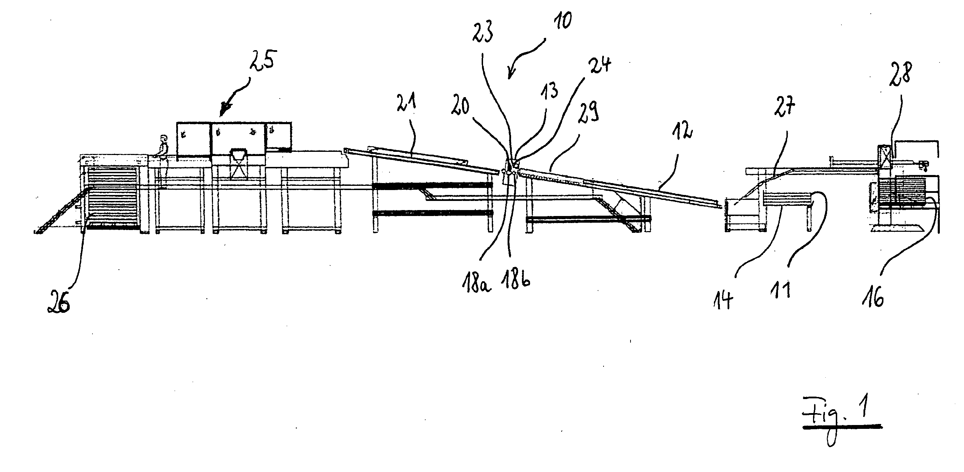

In Fig. 1 wird eine bevorzugte Ausführungsform der erfindungsgemäßen Vorrichtung 10 dargestellt. Die Vorrichtung 10 umfasst dabei eine Kaschiereinheit 27, eine Bogen-Richtstrecke 29, eine Rill- und Besäumeinheit 13 und eine der Rill- und Besäumeinheit 13 nachgeordnete Abstapeleinheit 25.

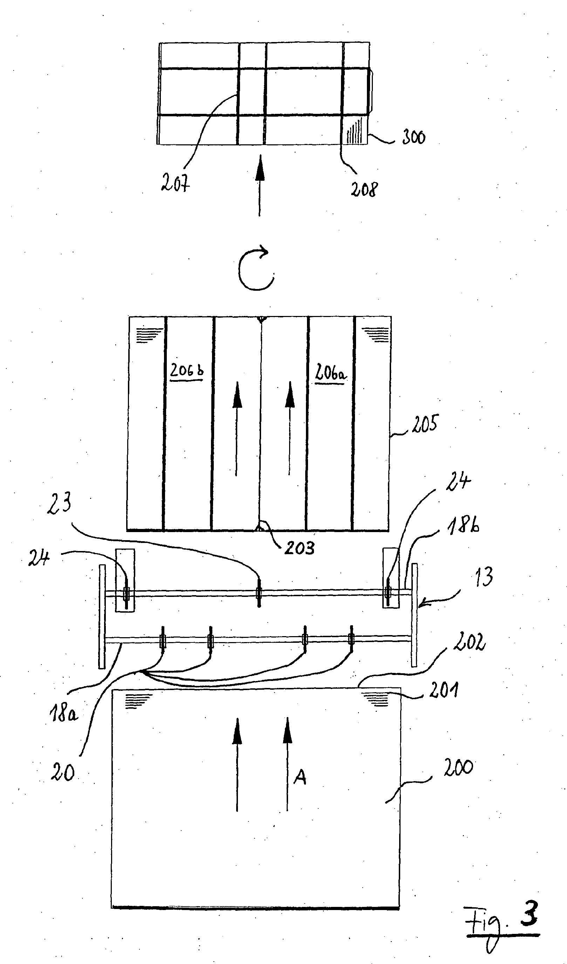

In der Fig. 1 ist die Kaschiereinheit 27 auf der rechten Seite der Vorrichtung 10 angeordnet. Die Kaschiereinheit 27 ist dabei so konfiguriert, dass in ihr bogenförmige Ausgangsbögen 11,16 verarbeitet werden können. Die glatten Deckbögen 16 werden über eine Abstapeleinheit 28 vereinzelt und in der Kaschiereinheit 27 mit jeweils einem beleimten Trägerbogen 11 zusammengeführt, der in einem Stapel 14 vorgehalten und einzeln der Kaschiereinheit 27 zugeführt wird. Nach dem Zusammenführen der Deck- und Trägerbögen 11, 16 in der Kaschiereinheit 27 werden diese verbunden und durch Druck- und/oder Wärmebeaufschlagung Wellpappebögen 200 hergestellt (vgl. Fig. 3). Hierzu weist die in der Fig. 1 dargestellte Vorrichtung 10 eine zusätzliche Press- und Heizstrecke 12 auf. Die in der Kaschiereinheit 27 gebildeten Wellpappebögen 200 verfügen z. B. über ein Maximalformat von 1650 x 1650 mm. Die Wellpappebögen 200 durchlaufen vor dem Zuführen zu einer Rill- und Besäumeinheit 13, in der Nutzen 206a,b gebildet werden, die dieser Einheit vorgelagerte Bogen-Richtstrecke 29.

Die Bogen-Richtstrecke 29 stellt sicher, dass die Wellpappebögen 200 präzise ausgerichtet an die Rill- und Besäumeinheit 13 weitergegeben werden. Die präzise Ausrichtung der Wellpappebögen 200 ist die Voraussetzung dafür, dass in der Rill- und Besäumeinheit 13 eine passgenaue Besäumung und Rillung der Wellpappebögen 200 erfolgt. Die Bogen-Richtstrecke 29 weist hierzu zusätzliche Richtkanten (nicht dargestellt) auf, über die die herangeführten Wellpappebögen 200 beaufschlagt und in die gewünschte Position verbracht werden können. Nach Durchlaufen der Bogenrichtstrecke 29 erreichen die Wellpappebögen 200 die Rill- und Besäumeinheit 13 exakt in der Vorschubrichtung A. Die Rill- und Besäumeinheit 13 weist im Ausführungsbeispiel mehrere Wellen 18a, b auf, an der Rill- und Besäumwerkzeuge 20, 24, aber auch zusätzliche Trennwerkzeuge 23, die nach Art einer Kreissäge oder eines Rotationsmessers ausgebildet sind, angeordnet sind.

Aufgrund der passgenauen Verbindung der Ausgangsbögen (glatter Deckbogen 16 und gewellter Trägerbogen 11) in der Kaschiereinheit 27 erübrigt sich ein Besäumen der in Vorschubrichtung vorderen Kante 202 der Wellpappebögen 200 bzw. der Nutzen 206a,b, da kein Überstand des Deckbogens 16 über den Trägerbogen 11 auftritt (vgl. Fig. 3). Wird die gesamte Breite des Wellpappebogens 200 ausgenutzt, und werden hierbei beispielsweise zwei Nutzen nebeneinander angeordnet, so weist die Rill- und Besäumeinheit 13 ein zusätzliches Trennwerkzeug 23 auf, das mittig an einer der Wellen 18a, b in der Rill- und Besäumeinheit 13 vorgesehen ist. Über dieses Trennwerkzeug 23, das als Trennmesser oder Trennsäge ausgebildet sein kann, erfolgt gleichzeitig das Besäumen der seitlichen Innenkanten 203 der aufgetrennten Nutzen 206a, b. Sind mehr als zwei Nutzen auf den Wellpappebögen 200 vorgesehen, kann die Anzahl an Trennwerkzeugen 23 entsprechend erhöht werden.

Als Besäumwerkzeug 24 für die seitlichen Aussenkanten 205 der Nutzen 206a,b (oder eines einzigen Nutzens, wenn das Trennwerkzeug 23 ausgebaut wird) kommen ebenfalls rotierende Messer oder Sägen in Frage. Vermieden wird durch die erfindungsgemäße Vorrichtung 10 somit die Verwendung einer in herkömmlichen Vorrichtungen eingesetzten separaten Stanze. Zur Längs-Rillung der Nutzen 206a,b weist die Rill- und Besäumeinheit 13 Rillwerkzeuge 20 auf, die beispielsweise in Form von Rillmessern ebenfalls an einer der Wellen 18a, b angeordnet sind. Über diese Rillwerkzeuge 20 erfolgt eine Druckbeaufschlagung der Nutzen 206a,b und damit eine Definition von Faltkanten (in Fig. 3 mit dickerer Strichstärke dargestellt). Die Rillwerkzeuge 20 sind in Fig. 3 an der in Durchlaufrichtung vorderen Welle 18a angeordnet, während in Fig. 1 diese Welle 18a der Welle 18b mit Besäumwerkzeugen 24 nachgeordnet sind. Grundsätzlich sind beide Anordnungen, also vorauslaufende oder nachlaufende Rillung möglich.

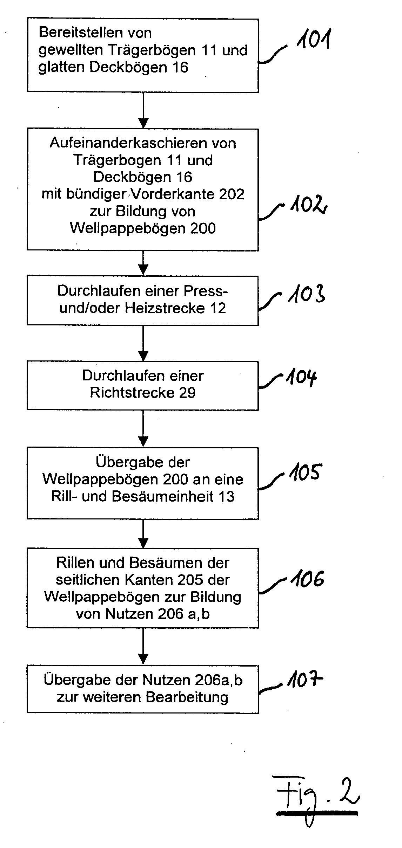

Die in Fig. 1 dargestellte Vorrichtung weist auch eine der Rill- und Besäumeinheit 13 nachgeordnete Fördervorrichtung 21 für die Weitergabe der fertigen Nutzen 206a,b an eine nachgeordnete Weiterverarbeitung auf. Dort werden im Ausführungsbeispiel aus den Nutzen 206a,b in einer Abpackstapeleinheit 25 Zuschnittstapel 26 für den Weiter- bzw. Abtransport gebildet. Die in der Fig. 1 dargestellte Vorrichtung ermöglicht die Durchführung des in Fig. 2 schematisch dargestellten Verfahrens zur Herstellung von Nutzen 206a,b für die Faitkistenproduktion in einem einzigen Arbeitsgang. Hier wird zunächst im Schritt 101 Bogenware bereitgestellt, wobei es sich um gewellte Trägerbögen 11 und glatte Deckbögen 16 handelt. Deckbögen 16 und Trägerbögen 11 sind dabei so ausgerichtet, dass die daraus gefertigten Wellpappebögen 200 in Vorschubrichtung der Kaschiereinheit 27 eine bündige Vorderkante 202 aufweisen (vgl. Fig 3). Nach der Bildung von Wellpappebögen 200 aus Deckbögen 16 und Trägerbögen 11 durchlaufen diese im Schritt 103 zum Aushärten des für die Kaschierung verwendeten Leims eine Press- und oder Heizstrecke 12 und werden von dort an eine Richtstrecke 29 übergeben (Schritt 104), auf der durch Beaufschlagung der (noch nicht besäumten) seitlichen Aussenkanten 205 eine exakte Ausrichtung der Wellpappebögen 200 auf die Rill- und Besäumeinheit 13 hin erfolgt. Die Wellpappebögen 200 werden anschließend an die Rill- und Besäumeinheit 13 übergeben (Schritt 105), in der mit Bildung der Nutzen 206a,b eine Rillung und Besäumung (Schritt 106) erfolgt. Nach dem Verlassen der Rill- und Besäumeinheit 13 werden die Nutzen 206a,b an eine Abstapeleinheit 25 weitergegeben (Schritt 107), in der das Vorbereiten für den Transport oder die Weitergabe an nachgeordnete Bearbeitungsstationen, wie beispielsweise an einen sog. Inliner erfolgt.

Fig. 3 zeigt in schematischer Darstellung die Produktionsschritte eines mit dem erfindungsgemäßen Verfahren hergestellten, besäumten und gerillten Nutzens 206a,b aus Wellpappebögen 200. In einer Kaschiereinheit 27 wurde ein glatter, z. B. im Offsetdruckverfahren bedruckter Deckbogen 16 auf einen gewellten Trägerbogen 11 aufkaschiert und so ein kaschierter Wellpappebogen 200 gebildet. Der Wellpappebogen 200 weist dabei einen quer zur Vorschubrichtung A ausgerichteten Wellenlauf 201 (liegende Welle) auf. Trägerbogen 11 und Deckbogen 16 werden mit in Vorschubrichtung A bündiger Vorderkante 202 aufeinanderkaschiert und aus der Kaschiereinheit 27, nach optionalem Durchlaufen einer Heiz- oder Pressstrecke 12 sowie der Ausrichtung auf einer Richtstrecke 29, an eine Rill- und Besäumeinheit 13 weitergegeben. Diese verfügt im Ausführungsbeispiel über zwei Wellen 18a, b mit vier drehfest an der ersten Welle 18a angeordneten umlaufenden Rillwerkzeugen 20, einem mittig an der zweiten Welle 18b angeordneten Trennmesser 23, sowie zwei jeweils seitlich an der Welle drehfest angeordneten Besäumwerkzeugen 24, die im Ausführungsbeispiel als Trennmesser ausgeführt sind. Hierdurch wird der seitliche Rand der Bögen 200 um einige Milli- oder Zentimeter besäumt, In der Rill- und Besäumeinheit 13 erfolgt somit das gleichzeitige Rillen und Besäumen des aus der Kaschiereinheit 27 übergebenen Wellpappebogens 200 bzw, der daraus gebildeten Nutzen 206a,b. Auf dem Wellpappebogen 200 sind im Ausführungsbeispiel der Fig. 3 zwei formgleiche Nutzen 206a,b angeordnet, die mittels des mittig an der zweiten Welle 18b angeordneten Trennmessers 23 in der Rill- und Besäumeinheit 13 ebenfalls getrennt werden, sodass zwei fertig gerillte und besäumte Nutzen 206a,b die Rill- und Besäumeinheit 13 verlassen und zur Weitergabe an einen Inliner (nicht dargestellt) zur Verfügung gestellt werden. Dort erfolgt nach Drehung der Nutzen 206a, b die Einbringung weitere Quer-Rillungen 207 und Quer-Einschnitte 208 in die Nutzen 206a,b sowie die Fertigstellung der Faltkisten in einer Faltklebeeinheit.

Mit dem erfindungsgemäßen Verfahren können vorformatierte Nutzen 206a,b unterbrechungsfrei in einem Arbeitsgang hergestellt werden. Möglich wird diese reibungslose Übergabe durch die Kaschierung der Deckbögen 16 auf dem zugehörigen Trägerbogen 11. mit in Vorschubrichtung A bündiger Vorderkante 202 und exakter Ausrichtung an bzw. in der Richtstrecke 29. Die Rill- und Besäumeinheit 13 ist dabei meist darauf ausgelegt, den Wellpappebogen 200 mit quer zur Vorschubrichtung A ausgerichtetem Wellenlauf 201 aufzunehmen, wobei selbstverständlich auch die Verarbeitung von Wellpappebögen 200 mit sog. stehender Welle, d.h. mit parallel zur Vorschubrichtung A ausgerichtetem Wellenlauf 201 möglich ist. Durch die Zusammenfassung der Arbeitsschritte Rillen und Besäumen, und ggf. Trennen der Nutzen, in einem Verfahren bzw. in einer Vorrichtung 10 werden die Taktzeiten bei der Herstellung von entsprechend ausgeführten Wellpappebögen 200 für die Faltkistenproduktion signifikant verringert. Das Verfahren kann zudem nahezu vollständig automatisiert werden, sodass zudem Bedienpersonal eingespart wird, wodurch sich weitere Kostenvorteile ergeben.

### Bezugszeichenliste

- 10 =: Vorrichtung
- 11 =: Trägerbogen
- 12 =: Press- und Heizstrecke
- 13 =: Rill- und Besäumeinheit
- 14 =: Stapel
- 16 =: Deckbogen
- 18a, b =: Welle
- 20 =: Rillwerkzeug
- 21 =: Fördervorrichtung
- 23 =: Trennwerkzeug
- 24 =: Besäumwerkzeug
- 25 =: Abstapeleinheit
- 26 =: Zuschnittstapel
- 27 =: Kaschiereinheit
- 28 =: Abstapeleinheit
- 29 =: Bogen-Richtstrecke
- 101 =: Bereitstellen von Bogenware
- 102 =: Aufeinanderkaschieren
- 103 =: Durchlaufen Press/Heizstrecke
- 104 =: Durchlaufen Richtstrecke
- 105 =: Übergabe an Rill- und Besäumeinheit
- 106 =: Rillung und Besäumung
- 107 =: Übergabe an Stapelvorrichtung
- 200 =: Wellpappebogen
- 201 =: Wellenlauf
- 202 =: Vorderkante
- 203 =: Innenkanten
- 205 =: Aussenkanten
- 206a, b =: Nutzen
- 207 =: Quer-Rillung
- 208 =: Quer-Einschnitt

## Patentansprüche

1. Verfahren zur Herstellung von kaschierten Nutzen (206a,b) aus ein- oder mehrlagiger Wellpappe, insbesondere zur Bildung von Faltkisten, umfassend die Schritte:
- Aufeinanderkaschieren (102) von bogenförmigen Materialien (11,16), insbesondere wenigstens eines gewellten Trägerbogens (11) und wenigstens eines glatten Deckbogens (16), zur Bildung von Materialbögen (200) in einer Kaschiereinheit (27),
- Übergabe (105) der Materialbögen (200) an eine Rill- und Besäumeinheit (13) zur Bildung von wenigstens einem Nutzen (206a,b) und
- Übergabe (107) der Nutzen (206a,b) zur weiteren Bearbeitung,
**dadurch gekennzeichnet, dass**
die bogenförmigen Materialien (11,16) mit in Vorschubrichtung (A) bündiger Vorderkante (202) aufeinanderkaschiert werden und in der Rill- und Besäumeinheit (13) eine parallel zur Vorschubrichtung (A) der gebildeten Nutzen (206a,b) ausgerichtete Rillung der/des Nutzen(-s) (206a,b) und ein Besäumen (106) der in Vorschubrichtung seitlichen Kanten (205) der/des Nutzen(-s) (206a,b) erfolgt, wobei vor der Übergabe an die Rill- und Besäumeinheit (13) eine Ausrichtung der Materialbögen (200) durchgeführt wird.

2. Verfahren nach Anspruch 1, **dadurch gekennzeichnet, dass**
die Wellenlage (201) des Trägerbogens (11) quer (liegende Welle) oder parallel (stehende Welle) zur Vorschubrichtung (A) ausgerichtet ist.

3. Verfahren nach Anspruch 1 oder 2, **dadurch gekennzeichnet, dass**
zwei oder mehr Nutzen (206a,b) in der Rill- und Besäumeinheit (13) parallel zur Vorschubrichtung (A) aufgetrennt werden, wobei Nutzen (206a,b) mit vorzugsweise identischer Form gebildet werden.

4. Verfahren nach einem der vorhergehenden Ansprüche, **dadurch gekennzeichnet, dass** vor dem Aufeinanderkaschieren ein Zuschneiden der Materialbahn quer zur Vorschubrichtung (A) erfolgt.

5. Vorrichtung (10) zur Herstellung von kaschierten Nutzen (206a,b) aus Wellpappe, insbesondere zur Bildung von Faltkisten, umfassend:
- eine Kaschiereinheit (11) zum Aufeinanderkaschieren (102) von bogenförmigen Ausgangsmaterialien (11, 16), Insbesondere wenigstens eines gewellten Trägerbogens (11) und wenigstens eines glatten Deckbogens (16), zur Bildung von Materialbögen (200),
- eine Fördervorrichtung (21) für die Nutzen (206a,b), und
- eine Rill- und Besäumeinheit (13),
**dadurch gekennzeichnet, dass**
die Rill- und Besäumeinheit (13) wenigstens eine Welle (18a, b) mit wenigstens einem daran drehfest angeordneten, umlaufenden Rill- und Besäumwerkzeug (20, 24) aufweist, wobei die Vorrichtung (10) eine der Rill- und Besäumeinheit (13) vorgelagerte Richtstrecke (29) für die Materialbögen (200) aufweist.

6. Vorrichtung (10) nach Anspruch 5, **dadurch gekennzeichnet, dass**
die Rill- und Besäumeinheit (13) Mittel zur Erfassung und/oder Ausrichtung der in Vorschubrichtung (A) vorderen Kante (202) der Nutzen (206a,b) aufweist,

7. Vorrichtung (10) nach Anspruch 5 oder 6, **dadurch gekennzeichnet, dass**
die Rill- und Besäumeinheit (13) wenigstens ein an der Welle (18a, b) angeordnetes, parallel zur Vorschubrichtung (A) der Nutzen (206a,b) ausgerichtetes Trennwerkzeug (23), insbesondere ein Trennmesser oder eine Trennsäge, aufweist.

8. Vorrichtung (10) nach einem der Ansprüche 5 bis 7, **dadurch gekennzeichnet, dass**
die Rill- und Besäumeinheit (13) zusätzlich rollen- oder walzenförmige Stanzwerkzeuge aufweist.

9. Vorrichtung (10) nach einem der Ansprüche 5 bis 8, **dadurch gekennzeichnet, dass**
die Vorrichtung (10) eine der Kaschiereinheit (27) nachgeordnete Press- und/oder Heizstrecke (12) aufweist.
